# EUROPEAN PATENT SPECIFICATION

(11) **EP 2 922 129 B1**
(45) Date of publication and mention of the grant of the patent: **19.12.2018**
(21) Application number: 15159188.0
(22) Date of filing: 16.03.2015
(51) Int. Cl.: H01M 8/04014, H01M 8/04664, H01M 8/04746, F24D 17/00, F24D 19/00, F24D 19/10

(54) **FUEL CELL SYSTEM**
BRENNSTOFFZELLENSYSTEM
SYSTÈME DE PILE À COMBUSTIBLE

(30) Priority: 20.03.2014 JP 2014058562
(43) Date of publication of application: 23.09.2015
(73) Proprietor: AISIN SEIKI KABUSHIKI KAISHA, Kariya-shi, Aichi 448-8650 (JP)
(72) Inventor: Goto, Shunsuke, Kariya-shi, Aichi 448-8650 (JP)
(74) Representative: TBK

(56) References cited:
- JP-A- 2006 024 431
- US-A1- 2011 283 448
- US-A1- 2014 007 602

## Description

### TECHNICAL FIELD

This disclosure generally relates to a fuel cell system.

### BACKGROUND DISCUSSION

A known fuel cell system performs a heat exchange between exhaust heat of a fuel cell module and storage water (hot or warmed water) so that the exhaust heat is recovered and stored in the storage water. The fuel cell system therefore includes the fuel cell module for performing a power generation by electrochemical reaction and emitting exhaust combustion gas that is generated by the power generation, a water storage tank storing water (hot or warmed water) that serves as the storage water, a water circulation line at which the storage water is circulated, a water circulation pump provided at the water circulation line, and a heat exchanger that performs the heat exchange between the exhaust combustion gas from the fuel cell module and the storage water. Because the storage water is heated at the heat exchanger, dissolved air such as air dissolved in the storage water or water vapor, for example, turns to air bubbles which stay or remain at the storage water circulation line. In consequence, a circulation flow rate of the storage water may be difficult to be secured.

In order to solve the aforementioned drawback, according to a fuel cell system disclosed in JP 2006 24431 A which will be hereinafter referred to as Reference 1 and includes the features set forth in the preamble of claim 1, in a case where it is determined that the air bubbles exist within the heat exchanger or the storage water circulation line, for example, and that the aforementioned air bubbles block a flow of the storage water, the water circulation pump is controlled to produce a maximum power output, thereby pushing out the air bubbles within the heat exchanger or the storage water circulation line.

Nevertheless, according to the fuel cell system disclosed in Reference 1, in a case where a pressure of the storage water (water pressure) at the storage water circulation line decreases, i.e., in a case where the water pressure decreases by cutoff of water supply to the water storage tank, for example, the dissolved air in the storage water is likely to become air bubbles based on Henry's law and Dalton's law. In addition, even when the number of rotations (i.e., rotation speed) of the storage water circulation pump increases by the maximum output power thereof so that the air bubbles are pushed out, for example, the water pressures at an inlet of the storage water circulation pump for suctioning the storage water and a periphery of an impeller of the storage water circulation pump decrease, which may cause the dissolved air in the storage water to easily become the air bubbles. As a result, the increased air bubbles are stirred by the operation of the storage water circulation pump, which may lead to an idle running of the storage water circulation pump and a difficulty in pushing out the air bubbles.

A need thus exists for a fuel cell system which may push out air bubbles from a storage water circulation line even in a case where a pressure of storage water at the storage water circulation line decreases.

### SUMMARY

According to an aspect of this disclosure, a fuel cell system includes the features set forth in claim 1.

Accordingly, in a case where it is detected that the air bubbles are generated at the storage water circulation line, the operation of the storage water circulation pump is controlled to stop for the predetermined time period so that the air bubbles which are stirred are raised by buoyancy to be collected at an upper portion of an inside of the storage water circulation pump, which results in a mass of air bubbles (enlarged air bubbles). The mass of air bubbles may be pushed out by a return or recovery of the operation of the storage water circulation pump. The air bubbles move to the upper portion of the water storage tank to stay thereat eventually so that a circulation flow rate of the storage water may be ensured. As a result, deposition of a component (calcium, for example) contained in the storage water, which is caused by evaporation of the storage water flowing through the heat exchanger, is inhibited. A corrosion of the heat exchanger resulting from an adhesion of a deposition substance (scale) to the heat exchanger is inhibited accordingly.

The air bubble detection portion may generate the air bubble detection signal in a case where one of an internal temperature and an outlet temperature of the heat exchanger exceeds a threshold value.

When the air bubbles are generated, the flow rate of the storage water decreases due to the generation of air bubbles and a cooling performance of the storage water is weakened. Thus, the generation of air bubbles is detectable on the basis of measurement of increase of the internal temperature or the outlet temperature of the heat exchanger.

The air bubble detection portion may generate the air bubble detection signal in a case where a rotation speed of the storage water circulation pump relative to an input value to the electric motor exceeds a threshold value.

When the air bubbles are generated, the rotation speed of the storage water circulation pump increases because the air bubbles are lighter than the storage water and thus a load relative to the storage water circulation pump decreases. Consequently, the generation of air bubbles is detectable on the basis of measurement of the rotation speed of the storage water circulation pump.

The fuel cell system may further include a water pressure decrease detection portion detecting that a water pressure at the storage water circulation line is lower than a threshold value. The control unit controls the operation of the storage water circulation pump so that a flow rate of the storage water flowing through the storage water circulation line increases in response to a water pressure decrease detection signal generated by the water pressure decrease detection portion.

Accordingly, in a case where the water pressure at the storage water circulation line becomes lower than the threshold value, the storage water circulation pump is operated to increase the flow rate of the storage water flowing through the storage water circulation line so as to ensure the flow rate of the storage water.

The water pressure decrease detection portion may include a pressure sensor provided at an upstream side than the heat exchanger at the storage water circulation line.

Accordingly, the decrease of water pressure at the storage water circulation line is directly detectable by the pressure sensor.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic view illustrating a fuel cell system according to an embodiment disclosed here;
Fig. 2 is a block diagram of the fuel cell system illustrated in Fig. 1;
Fig. 3 is a flowchart of a control program (first control example) performed by a control unit illustrated in Fig. 2;
Fig. 4 is a graph illustrating a threshold value for a temperature of storage water at an inside of a heat exchanger used for a detection of air bubbles;
Fig. 5 is a graph illustrating a threshold value for a rotation speed of a water circulation pump used for the detection of air bubbles;
Fig. 6 is an explanatory view illustrating the water circulation pump and a mass of air bubbles; and
Fig. 7 is a flowchart of a control program (second control example) performed by the control unit illustrated in Fig. 2.

### DETAILED DESCRIPTION

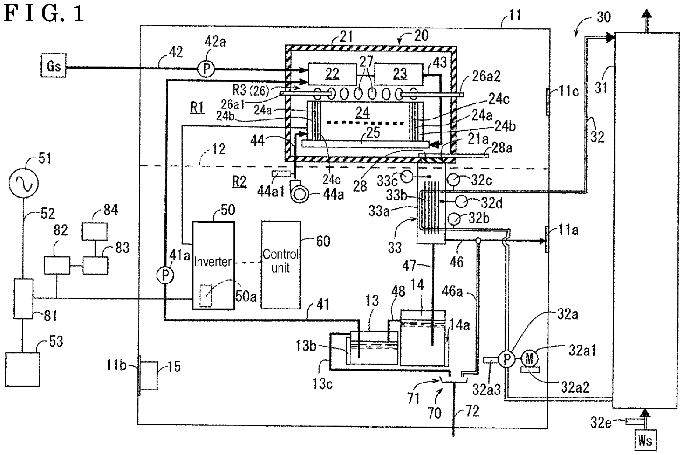

An embodiment will be explained with reference to the attached drawings. As illustrated in Fig. 1, a fuel cell system of the embodiment includes a case 11 substantially in a box form, a fuel cell module 20, an exhaust heat recovery system 30, an inverter device 50, and a control unit 60.

The case 11 includes a partition member 12 dividing an inside of the case 11 into a first chamber R1 serving as a first void and a second chamber R2 serving as a second void. The partition member 12 is a member dividing or separating the inside of the case 11 in a vertical direction (in an up-and-down direction). The first chamber R1 and the second chamber R2 are in communication with each other.

The fuel cell module 20 is accommodated within the first chamber R1 while having a distance (or a void) from an inner wall surface of the first chamber R1. The fuel cell module 20 at least includes a casing 21 and a fuel cell 24. According to the present embodiment, the fuel cell module 20 includes the casing 21, an evaporating portion 22, a reforming portion 23, and the fuel cell 24.

The casing 21 in a box form is made of an insulative material. The casing 21 is disposed at the partition member 12 via a support structure within the first chamber R1 while having the distance from the inner wall surface of the first chamber R1. The evaporating portion 22, the reforming portion 23, the fuel cell 24, and a combustion void R3 serving as a first combusting portion 26 are arranged within the casing 21 in a state where the evaporating portion 22 and the reforming portion 23 are positioned at an upper side of the fuel cell 24.

The evaporating portion 22, which is heated by combustion gas, evaporates water (i.e., water for reforming) supplied to the evaporating portion 22 so as to generate water vapor and preheats a source material (fuel) supplied to the evaporating portion 22. The evaporating portion 22 mixes the water vapor generated in the aforementioned manner and the source material that is preheated so as to supply the mixture to the reforming portion 23. The source material corresponds to gaseous fuel such as natural gas and LPG, for example, and liquid fuel such as kerosene, gasoline, and methanol, for example. According to the present embodiment, the natural gas is used as the source material.

A first end of a water supply pipe 41 is connected to the evaporating portion 22. A second end (a lower end) of the water supply pipe 41 is connected to a water tank 13 (a water reservoir) so that the second end is positioned within the water tank 13. A water pump 41a is provided at the water supply pipe 41. The water pump 41a supplies water to the evaporating portion 22 and controls or adjusts a volume of water (i.e., a flow rate of water per unit time) supplied to the evaporating portion 22. The water pump 41a supplies condensed water stored at the water tank 13 to the evaporating portion 22 as water for reforming.

The source material is supplied to the evaporating portion 22 via a fuel supply pipe 42 from a supply source of the source material (which will be hereinafter simply referred to as a supply source) Gs. The supply source Gs corresponds to a city gas supply line or an LP gas cylinder, for example. A fuel pump 42a is provided at the fuel supply pipe 42 in a state to be housed in the case 11. The fuel pump 42a is a supply device that supplies fuel (source material) to the fuel cell 24. In response to a control command value from the control unit 60, the fuel pump 42a adjusts or controls a supply amount of fuel (i.e., a flow rate of fuel per unit time) from the supply source Gs. The fuel pump 42a suctions the source material and sends the source material in a pressing manner to the evaporating portion 22.

The reforming portion 23 is heated by the combustion gas so as to receive heat necessary for a water vapor reforming reaction. As a result, the reforming portion 23 generates reformed gas from mixed gas (source material and water vapor) supplied from the evaporating portion 22. Specifically, the inside of the reforming portion 23 is filled with a catalyst, for example, a ruthenium catalyst (Ru catalyst) and a nickel catalyst (Ni catalyst). The mixed gas supplied from the evaporating portion 22 reacts by means of the catalyst so as to be reformed, thereby generating hydrogen gas and carbon monoxide gas (water vapor reforming reaction). At the same time, carbon monoxide generated during the water vapor reforming reaction and water vapor react so as to be converted to hydrogen gas and carbon dioxide, i.e., a carbon monoxide shift reaction occurs. The thus generated gas (reformed gas) is supplied to a fuel electrode of the fuel cell 24. The reformed gas includes hydrogen, carbon monoxide, carbon dioxide, water vapor, natural gas (methane gas) that is not reformed, and water (water vapor) not used for reforming. Accordingly, the reforming portion 23 generates the reformed gas serving as fuel from the source material and water to supply the reformed gas to the fuel cell 24. The water vapor reforming reaction is an endothermic reaction while the carbon monoxide shift reaction is an exothermic reaction.

The fuel cell 24 includes a lamination of plural cells 24a each including a fuel electrode, an air electrode (an oxidant electrode), and an electrolyte disposed between the fuel electrode and the air electrode. The fuel cell 24 according to the present embodiment is a solid oxide fuel cell (SOFC) where zirconium oxide serving as a solid oxide is used as the electrolyte. The fuel electrode of the fuel cell 24 is supplied with hydrogen, carbon monoxide, and methane gas, for example, as fuel. An operating temperature of the fuel cell 24 is substantially in a range from 400 °C to 1,000 °C. Not only hydrogen is used as the fuel but also natural gas or coal gas may be directly used as the fuel. When the natural gas or the coal gas is directly used as the fuel, the reforming portion 23 may be omitted. A fuel flow passage 24b through which the reformed gas serving as the fuel flows is formed at each of the cells 24a so as to face the fuel electrode thereof. An air flow passage 24c through which air (cathode air) serving as oxidant gas flows is formed at each of the cells 24a so as to face the air electrode thereof.

The fuel cell 24 is placed on a manifold 25. The reformed gas is supplied from the reforming portion 23 to the manifold 25 via a reformed gas supply pipe 43. A lower end (a first end) of the fuel flow passage 24b is connected to a fuel lead-out port formed at the manifold 25. The reformed gas led out from the fuel lead-out port of the manifold 25 is introduced from the lower end of the fuel flow passage 24b and is discharged from an upper end of the fuel flow passage 24b. The cathode air sent from a cathode air blower 44a flows through a cathode air supply pipe 44 so as to be supplied from a lower end of the air flow passage 24c and be discharged from an upper end of the air flow passage 24c.

The cathode air blower 44a is arranged within the second chamber R2. The cathode air blower 44a suctions air within the second chamber R2 and discharges the air to the air electrode of the fuel cell 24. A discharge volume of air by the cathode air blower 44a is regulated and controlled (for example, controlled on a basis of a load electric power (power consumption) of the fuel cell 24). A flow sensor 44a1 provided at a downstream side of the cathode air blower 44a at the cathode air supply pipe 44 detects a flow rate of cathode air discharged from the cathode air blower 44a.

In the fuel cell 24, the fuel supplied to the fuel electrode and the oxidant gas supplied to the air electrode achieve a power generation. Reactions indicated by a chemical formula (1) and a chemical formula (2) as below occur at the fuel electrode while a reaction indicated by a chemical formula (3) as below occurs at the air electrode. That is, oxide ion (O^{2⁻}) generated at the air electrode penetrates through the electrolyte so as to react with hydrogen at the fuel electrode, thereby generating an electric energy. As a result, the reformed gas and the oxidant gas (air) that have not been used in the power generation are discharged from the fuel flow passage 24b and the air flow passage 24c respectively.

(1) H₂ + O^{2⁻} → H₂O + 2e⁻

(2 CO + O^{2⁻} → CO₂+ 2e⁻

(3) 1/2O₂ + 2e⁻ → O^{2⁻}

The reformed gas (anode-off gas) that has not been used in the power generation is discharged from the fuel flow passage 24b and is burnt at the combustion void R3 formed between the fuel cell 24 and the evaporating portion 22 (the reforming portion 23) by means of the oxidant gas (cathode-off gas) that has not been used in the power generation. The resulting combustion gas (flames 27) heats the evaporating portion 22 and the reforming portion 23, and further brings the inside of the fuel cell module 20 to be heated at an operating temperature. Afterwards, the combustion gas is discharged to the outside of the fuel cell module 20 from an exhaust opening 21a. Accordingly, the aforementioned combustion void R3 constitutes the first combusting portion 26 heating the reforming portion 23 by burning the anode-off gas and the cathode-off gas from the fuel cell 24. The first combusting portion 26 receives combustible gas including unused fuel not used for generating an electric power from the fuel cell 24 to burn the combustible gas by the oxidant gas and sends out exhaust combustion gas. The anode-off gas is burnt to generate the flames 27 at the first combusting portion 26 (the combustion void R3). First and second ignition heaters 26a1 and 26a2 are provided at the first combusting portion 26 so as to ignite the anode-off gas.

The exhaust heat recovery system 30 performs a heat exchange between exhaust heat of the fuel cell 24 and storage water so that the exhaust heat is recovered and stored in the storage water. The exhaust heat recovery system 30 includes a water storage tank 31 storing water (hot or warmed water) serving as the storage water, a water circulation line 32 (a storage water circulation line) where the water (storage water) is circulated, and a heat exchanger 33 where the heat exchange is performed between the exhaust combustion gas from the fuel cell module 20 and the water (storage water).

The water storage tank 31 includes a single columnar container in which the water (hot or warmed water) is stored in such a manner that a temperature is the highest at an upper portion of the water in the container, is gradually decreasing towards a lower portion of the water, and is the lowest at the lower portion of the water in the container. A water supply source Ws, i.e., a water pipe, for example, is connected to a lower portion of the columnar container of the water storage tank 31 so that water at a relatively low temperature is supplied from the water supply source Ws, for example, tap water is supplied, to the water storage tank 31. A pressure sensor 32e is provided at an entrance of the water storage tank 31 where the water is supplied from the water supply source Ws so as to detect a pressure of the water supplied to the water storage tank 31 from the water supply source Ws and to send a detection result to the control unit 60. Alternatively, the pressure sensor 32e may be disposed at an upstream side of a water circulation pump 32a (a storage water circulation pump) that is provided at the water circulation line 32 to send the detection result to the control unit 60. Then, based on the detection result from the pressure sensor 32e, the water pressure at the water circulation line 32 and a cutoff of water supply from the water supply source Ws is detectable. In addition, the water at a high temperature, i.e., hot or warmed water, stored at the water storage tank 31 is led out from the upper portion of the columnar container of the water storage tank 31.

A first end of the water circulation line 32 is connected to the lower portion of the water storage tank 31 while a second end of the water circulation line 32 is connected to the upper portion of the water storage tank 31. The water circulation pump 32a, a first temperature sensor 32b, the heat exchanger 33, a third temperature sensor 32d, and a second temperature sensor 32c are provided in the mentioned order at the water circulation line 32 from the first end towards the second end thereof. The water circulation pump 32a suctions the water (storage water) at the lower portion of the water storage tank 31 so that the water flows in an arrow direction in Fig. 1 through the water circulation line 32 to be supplied and discharged to the upper portion of the water storage tank 31. A flow rate (a sending amount) of the water flowing through the water circulation line 32 is controlled by the water circulation pump 32a. The sending amount of the water by the water circulation pump 32a is controlled so that a detection temperature by the second temperature sensor 32c (i.e., a temperature of the water at an inlet side of the water storage tank 31) turns to be a predetermined temperature or falls within a predetermined temperature range.

The water circulation pump 32a is driven by an electric motor 32a1. The water circulation pump 32a rotates at a predetermined speed (i.e., predetermined rotation numbers) in response to an input value input to the electric motor 32a1, i.e., a voltage value of a power supply voltage. A voltage sensor 32a2 detects the input value of the electric motor 32a1, i.e., the voltage value of the power supply voltage, and sends a detection result to the control unit 60. A rotation sensor 32a3 detects a rotation speed (rotation numbers) of the water circulation pump 32a and sends a detection result to the control unit 60.

The first temperature sensor 32b is provided at a portion of the water circulation line 32 where the storage water flows towards the heat exchanger 33 between the heat exchanger 33 and the water storage tank 31. The first temperature sensor 32b detects the temperature of the water at an inlet portion of the heat exchanger 33 into which the water flows (i.e., a heat exchanger inlet water temperature) corresponding to the temperature of the water that flows out of (exits from) the water storage tank 31 (i.e., a storage tank outlet water temperature). The first temperature sensor 32b transmits a detection result to the control unit 60.

The second temperature sensor 32c is provided at a portion of the water circulation line 32 where the storage water flows out from the heat exchanger 33. The second temperature sensor 32c detects the temperature of the water at an outlet portion of the heat exchanger 33 out of which the water flows (i.e., a heat exchanger outlet water temperature) corresponding to the temperature of the water that flows into the water storage tank 31 (i.e., a storage tank inlet water temperature). The second temperature sensor 32c transmits a detection result to the control unit 60.

The third temperature sensor 32d is provided at a portion of the water circulation line 32 within the heat exchanger 33. The third temperature sensor 32d detects the temperature of the water at an inside of the heat exchanger 33 (i.e., a heat exchanger internal water temperature). The third temperature sensor 32d transmits a detection result to the control unit 60.

The heat exchanger 33 is supplied with the exhaust combustion gas emitted from the fuel cell module 20 and with the storage water from the water storage tank 31 so as to perform the heat exchange between the exhaust combustion gas and the storage water. The heat exchanger 33 is arranged within the case 11. According to the present embodiment, the heat exchanger 33 is provided at a lower side of the fuel cell module 20. At least a lower portion of the heat exchanger 33 penetrates through the partition member 12 and projects to the second chamber R2.

The heat exchanger 33 includes a casing 33a. An upper portion of the casing 33a is in communication with the exhaust opening 21a provided at a lower portion of the casing 21 of the fuel cell module 20 so that the exhaust combustion gas is discharged through the exhaust opening 21a. An exhaust pipe 46, which is connected to an exhaust port 11a, is connected to a lower portion of the casing 33a. A condensed water supply pipe 47 connected to a deionizer 14 is connected to a bottom portion of the casing 33a. A heat exchanging portion 33b serving as a condensation portion connected to the water circulation line 32 is provided within the casing 33a.

According to the heat exchanger 33 including the aforementioned configuration, the exhaust combustion gas from the fuel cell module 20 flows into the casing 33a through the exhaust opening 21a. In a case where the exhaust combustion gas flows through the heat exchanging portion 33b where the storage water flows, the heat exchange is performed between the exhaust combustion gas and the storage water, thereby causing the exhaust combustion gas to be condensed and cooled. The exhaust combustion gas after condensation flows through the exhaust pipe 46 to be discharged to the outside of the case 11 via the exhaust port 11a. Condensed water resulting from the aforementioned heat exchange flows through the condensed water supply pipe 47 so as to be supplied to the deionizer 14 (i.e., the condensed water drops by its own weight). On the other hand, the storage water flowing to the heat exchanging portion 33b is heated so as to flow out towards the upper portion of the water storage tank 31.

Accordingly, the heat exchanger 33 serves as a condenser that generates the condensed water by condensation of water vapor in gas that flows through the fuel cell system and that includes water via the heat exchange between the gas and a heat medium in liquid state. In the embodiment, the gas including water and flowing through the fuel cell system is the exhaust combustion gas and the heat medium in liquid state is the storage water.

A second combusting portion 28 is provided at an inlet port of the heat exchanger 33 into which the exhaust combustion gas flows, i.e., at the exhaust opening 21a of the casing 21. The second combusting portion 28 receives and brings in offgas of the first combusting portion 26, i.e., unused combustible gas discharged from the first combusting portion 26 (for example, hydrogen, methane gas, or carbon monoxide) so as to burn and send out the aforementioned offgas. The second combusting portion 28 is constituted by a combustion catalyst serving as a catalyst for burning the combustible gas. The combustion catalyst is obtained, for example, by noble metal such as platinum or palladium deposited on a ceramic carrier. A pellet catalyst, a ceramic honeycomb catalyst, or a metal honeycomb catalyst may be used as the combustion catalyst. In addition, noble metal may be deposited on a foam metal carrier, for example.

A combustion catalytic heater 28a is provided at the second combusting portion 28 for heating the combustion catalyst to an activating temperature thereof so as to burn the combustible gas. The combustion catalytic heater 28a is operated by a command of the control unit 60.

A fourth temperature sensor 33c is provided at a portion (inlet port) of the heat exchanger 33 where the exhaust combustion gas flows in, i.e., at the downstream side of the combustion catalyst heater 28a. The fourth temperature sensor 33c detects the temperature of the exhaust combustion gas that flows into (enters) the heat exchanger 33 (i.e., a heat exchanger inlet gas temperature) and sends a detection result to the control unit 60.

The fuel cell system of the present embodiment also includes the water tank 13 and the deionizer 14. The water tank 13 and the deionizer 14 are arranged within the second chamber R2. The water tank 13 stores pure water (deionized water) supplied from the deionizer 14. The water tank 13 is a water reservoir for storing the condensed water supplied from the heat exchanger 33. In the embodiment, a condensation water line which includes the water tank 13 serves as a water conduit through which the condensation water flowing out from the heat exchanger 33 flows. The condensation water line Lg is constituted by the condensed water supply pipe 47, the deionizer 14, a pipe 48 and the water tank 13. Alternatively, the condensation water line Lg may be constituted without the deionizer 14.

A water tank antifreezing heater 13b serving as a heating device is provided at the water tank 13 for heating the condensation water within the water tank 13 (i.e., for heating the water tank 13). The heating device is configured to heat the condensation water, i.e., condensation water system. The water tank antifreezing heater 13b corresponds to, for example, an electric heater or a combustion device (for example, a burner) and is configured to be controlled by the control unit 60. The water tank antifreezing heater 13b heats the water tank 13 so that the water tank 13 is inhibited from being frozen.

The deionizer 14 brings the condensation water sent from the heat exchanger 33 to be formed into the pure water (deionized water) by means of ion-exchange resin. The deionizer 14 is in communication with the water tank 13 via the pipe 48. The pure water in the deionizer 14 is supplied to the water tank 13 by flowing through the pipe 48. That is, the deionizer 14 makes the condensation water supplied from the water tank 13 to be formed into the pure water which is then supplied to the water tank 13.

A deionizer antifreezing heater 14a serving as a heating device is provided at the deionizer 14 for heating the condensation water within the deionizer 14 (i.e., for heating the deionizer 14). The deionizer antifreezing heater 14a is configured in the similar way to the water tank antifreezing heater 13b. The deionizer antifreezing heater 14a heats the deionizer 14 so that the deionizer 14 is inhibited from being frozen.

The fuel cell system includes a drainage system 70. The drainage system 70 includes a water-receiving member 71 and a drainage pipe 72. The water-receiving member 71 at least receives water leaking from the water tank 13 that is provided within the case 11. Respective lower ends of an overflow line 13c and a drain pipe 46a are disposed immediately above the water-receiving member 71. Thus, the water-receiving member 71 may securely receive the water leaking from the water tank 13 via the overflow line 13c. Outside water, for example, rainwater that enters through the exhaust port 11a may be securely received via the exhaust pipe 46 and the drain pipe 46a. The drainage pipe 72 is configured to discharge the water received by the water-receiving member 71 to the outside of the case 11.

An upper end of the drain pipe 46a is connected to the exhaust pipe 46. The lower end of the drain pipe 46a is elongated downward to an upper position of the water-receiving member 71. The drain pipe 46a is provided to restrain the outside water that enters through the exhaust port 11a from flowing into the deionizer 14 via the heat exchanger 33.

The fuel cell system includes an air inlet port 11b formed at the case 11 forming the second chamber R2, an air outlet port 11c formed at the case 11 forming the first chamber R1, and a ventilation air blower 15 provided at the air inlet port 11b. The ventilation air blower 15 is a ventilator for ventilating the case 11. In a case where the ventilation air blower 15 is operated, outside air is suctioned to the ventilation air blower 15 via the air inlet port 11b and is sent to the second chamber R2. Further, gas (mainly air) within the second chamber R2 flows to the first chamber R1 by passing through the partition member 12. Gas within the first chamber R1 is discharged to the outside of the case 11 via the air outlet port 11c.

The fuel cell system also includes the inverter device 50. The inverter device 50 includes a first function for receiving a direct-current (DC) voltage output from the fuel cell 24 and converting the DC voltage into a predetermined alternating-current (AC) voltage so as to output the AC voltage to a power line 52 connected to an alternating system power supply 51 (hereinafter simply referred to as a system power supply 51) and an external electric power load 53 (hereinafter simply referred to as an electric power load 53). The inverter device 50 also includes a second function for receiving an AC voltage from the system power supply 51 via the power line 52 and converting the AC voltage into a predetermined DC voltage so as to output the DC voltage to an auxiliary machinery and/or the control unit 60. The inverter device 50 further includes a power failure sensor 50a that detects a power failure of the AC voltage of the system power supply 51 and transmits a detection result to the control unit 60.

The system power supply (or a commercial power supply) 51 supplies the electric power to the electric power load 53 via the power line 52 connected to the system power supply 51. The fuel cell 24 is connected to the power line 52 via the inverter device 50. The electric power load 53 is a load driven by an AC power source, i.e., a hair drier, a refrigerator, and a television, for example.

Further, as illustrated in Fig. 1, the fuel cell system includes a distribution board 81, an automatic power switching device 82, and an electric outlet for a self-sustained operation of the fuel cell system (which will be hereinafter simply referred to as an electric outlet) 83. In a case where a power failure of the AC voltage of the system power supply 51 is detected by the power failure sensor 50a during the power generation of the fuel cell module 20, the control unit 60 of the fuel cell system operates the distribution board 81 and the automatic power switching device 82 so that the system power supply 51 is immediately disconnected from the fuel cell system. At the same time as the disconnection of the system power supply 51 from the fuel cell system, while supplying a necessary electric power to the auxiliary machinery such as a pump and a fan, for example, for continuing the power generation, the control unit 60 switches an operation mode of the fuel cell system to the self-sustained operation in which the electric power is supplied to the electric outlet 83. A household electric appliance 84, i.e., a television, a laptop computer, a desk lamp, an electric fan, and the like is connected to the electric outlet 83 so that the household electric appliance 84 can be used.

The auxiliary machinery is constituted by the motor-driven pumps 41a, 42a for supplying water and air, the ventilation air blower 15, the cathode air blower 44a, the deionizer antifreezing heater 14a, the water tank antifreezing heater 13b, the ignition heaters 26a, 26b1, the combustion catalyst heater 28a, the water circulation pump 32a, and the like.

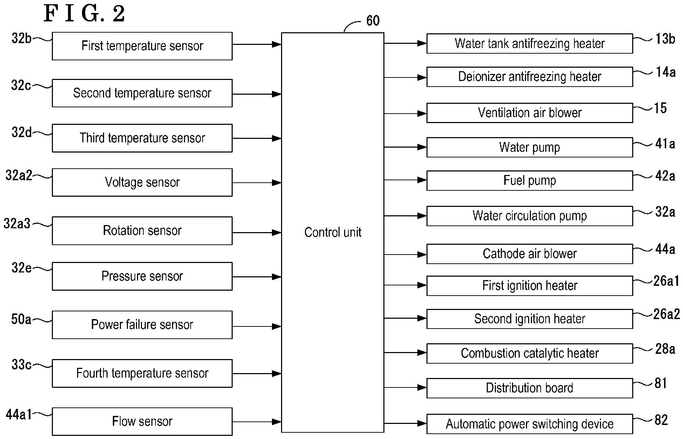

As illustrated in Fig. 2, the temperature sensors 32b, 32c, 32d, 33c, the voltage sensor 32a2, the rotation sensor 32a3, the pressure sensor 32e, the power failure sensor 50a, the flow sensor 44a1, the pumps 32a, 41a, 42a, the blowers 15, 44a, and the heaters 13b, 14a, 26a1, 26a2, 28a, the distribution board 81, and the automatic power switching device 82 are connected to the control unit 60. The control unit 60 includes a microcomputer having an input-output interface (I/O interface), a CPU, a RAM, and a ROM all of which are connected to one another via a bus. The CPU has a function to operate the fuel cell system. The RAM temporarily stores a variable necessary to perform program (control program) for the operation of the fuel cell system. The ROM stores such program.

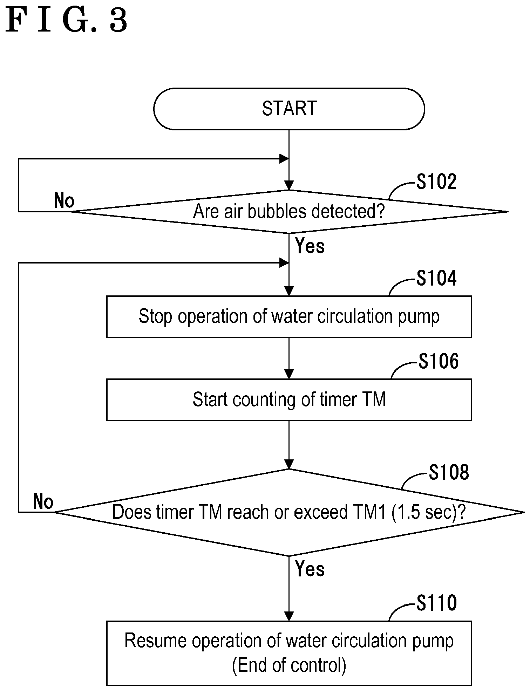

Next, detection and pushing-out of air bubbles at the water circulation line 32 will be explained as a first control example for the operation of the fuel cell system. In a case where a start switch is turned on (or in a case where an automatic start is conducted because a start time which is specified beforehand by a user is reached), the water circulation pump 32a starts operating and program corresponding to a flowchart illustrated in Fig. 3 is started.

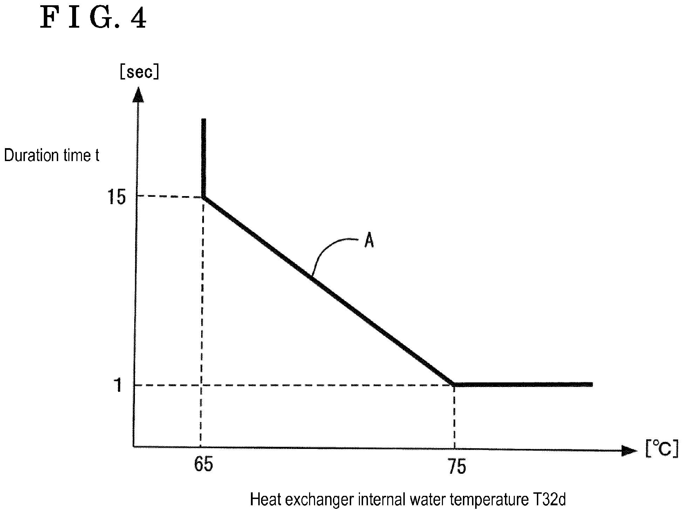

In step S102 (hereinafter "step" will be omitted), the control unit 60 determines whether or not air bubbles are generated at the water circulation line 32. For example, the control unit 60 performs the aforementioned determination based on whether or not an internal temperature T32d of the heat exchanger 33 correlated to or based on a duration time t during which the internal temperature T32d is continued or maintained exceeds a threshold value A. The internal temperature T32d which is detected by the third temperature sensor 32d corresponds to the temperature of the storage water at the water circulation line 32 within the heat exchanger 33. As illustrated in Fig. 4, the threshold value A is specified on a basis of the duration time t during which the internal temperature T32d is continued or maintained. For example, in a case where the internal temperature T32d of the heat exchanger 33 is 65 °C, the duration time t is specified to be 15 seconds. In a case where the internal temperature T32d is 75 °C, the duration time t is specified to be 1 second.

Instead, the determination of whether or not the air bubbles are generated at the water circulation line 32 may be conducted on a basis of whether or not an outlet temperature T32c of the heat exchanger 33 at the water circulation line 32 detected by the temperature sensor 32c exceeds a predetermined value. The outlet temperature T32c corresponds to the temperature of the storage water flowing out of the heat exchanger 33 at the water circulation line 32.

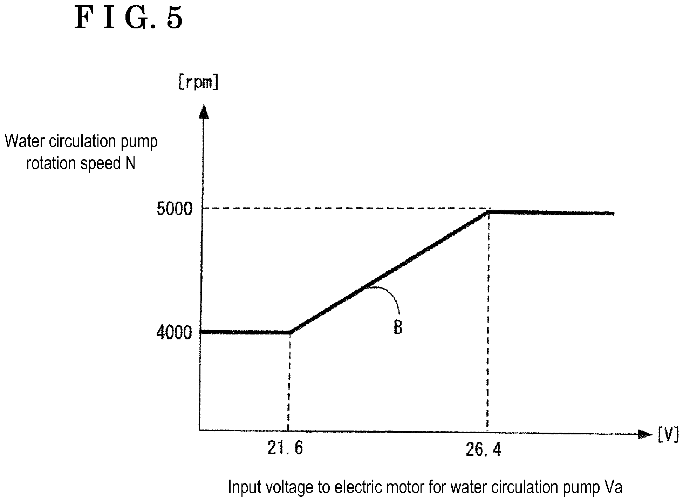

Further, the determination of whether or not the air bubbles are generated at the water circulation line 32 may be conducted on a basis of whether or not the rotation speed (i.e., the number of rotations) of the water circulation pump 32a relative to the input value input to the electric motor 32a1 (i.e., input voltage) that drives the water circulation pump 32a exceeds a threshold value B by the detection results of the voltage sensor 32a2 and the rotation sensor 32a3. Specifically, as illustrated in Fig. 5, the threshold value B is specified on a basis of the number of rotations N (rotation speed) of the water circulation pump 32a relative to an input voltage Va serving as the input value to the electric motor 32a1. For example, in a case where the input voltage Va is 21.6 volts, the number of rotations N is 4000. In a case where the input voltage Va is 26.4 volts, the number of rotations N is 5000. The input voltage Va is detected by the voltage sensor 32a2. A predetermined voltage, i.e., 24 volts, of the input voltage Va is generally applied to the electric motor 32a1, however, the input voltage may fluctuate.

In a case where the control unit 60 determines that the air bubbles are generated, a positive determination ("Yes") is made in S102 and the program proceeds to S104. On the other hand, in a case where the generation of air bubbles is not detected, the control unit 60 makes a negative determination ("No") in S102 and the operation in S102 is repeated. S102 serves as an air bubble detection portion.

In S104, the control unit 60 stops the operation of the water circulation pump 32a. In association with the stop of the operation of the water circulation pump 32a, i.e., decrease or stop of rotations of the water circulation pump 32a, the circulation of the storage water at the water circulation line 32 is stopped.

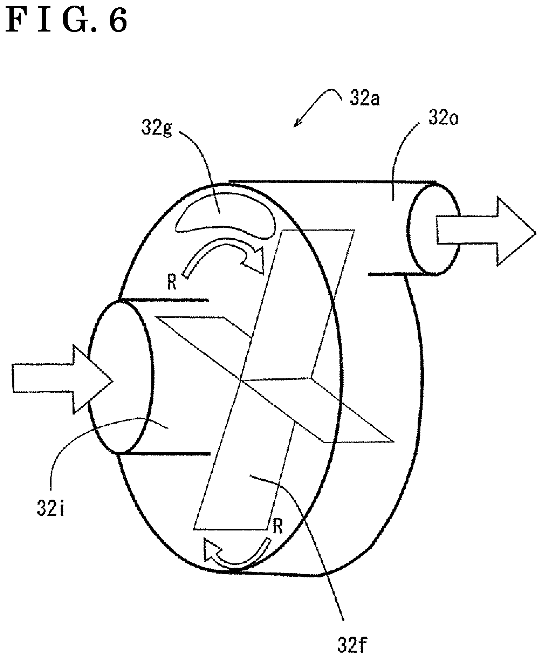

The program proceeds to S106 at the substantially same time as the program proceeds to S104 so that a timer TM starts counting. While the timer TM is counting, the circulation of the storage water at the water circulation line 32 is stopped. Thus, the air bubbles stirred by a rotation of an impeller 32f of the water circulation pump 32a are lifted up by buoyancy to be collected at an upper portion of an inside of the water circulation pump 32a. As illustrated in Fig. 6, the air bubbles are enlarged to become a mass 32g. The air bubbles are likely to be generated at an inlet 32i of the water circulation pump 32a and a rear side of the impeller 32f in a rotation direction thereof where the water pressure decreases. The water circulation pump 32a also includes an outlet portion 32o as illustrated in Fig. 6. An arrow R in Fig. 6 indicates the rotation direction of the impeller 32f.

In S108, the control unit 60 determines whether or not the operation stop of the water circulation pump 32a continues for a predetermined time period. Specifically, the control unit 60 determines that the air bubbles are collected at the upper portion of the inside of the water circulation pump 32a to become the mass 32g serving as the large air bubbles as illustrated in Fig. 6 in a case where the value counted by the timer TM reaches or exceeds a predetermined value TM1 from the start of counting at which the air bubbles are detected. The predetermined value TM1 corresponds to a time period required for the air bubbles to be lifted up by buoyancy so that the air bubbles are enlarged to become the mass 32g. For example, the predetermined value TM1 is specified to be 1.5 seconds.

In a case where the value counted by the timer TM reaches or exceeds the predetermined value TM1, the control unit 60 determines Yes in S108 and the program proceeds to S110 so as to resume or return the operation of the water circulation pump 32a. The mass 32g collected at the upper portion of the inside of the water circulation pump 32a may be pushed out therefrom by the rotation of the water circulation pump 32a.

The aforementioned air bubbles (the mass 32g) are moved by the operation of the water circulation pump 32a so as to eventually stay and remain at the upper portion of the water storage tank 31. A circulation flow rate of the storage water may be thus secured. In consequence, because the circulation flow rate of the storage water is secured, deposition of a component (for example, calcium) contained in the storage water caused by evaporation of the storage water that flows through the heat exchanger 33 is inhibited. A corrosion of the heat exchanger 33 resulting from an adhesion of a deposition substance (scale) to the heat exchanger 33 is inhibited accordingly.

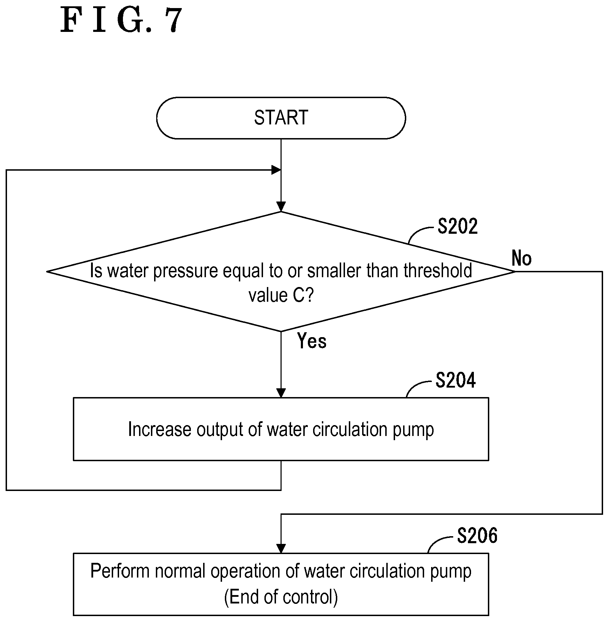

Next, detection and control of decrease of the water pressure at the water circulation line 32 will be explained as a second control example for the operation of the fuel cell system. In a case where the start switch is turned on (or in a case where the automatic start is conducted because the start time which is specified beforehand by the user is reached), the water circulation pump 32a starts operating and program corresponding to a flowchart illustrated in Fig. 7 is started.

In S202, the control unit 60 determines whether or not the water pressure at the water circulation line 32 is equal to or smaller than a threshold value C based on the detection result of the pressure sensor 32e. The threshold value C corresponds to a water pressure at the time of cutoff of water supply or a water pressure at which a flow volume of storage water at the water circulation line 32 is ensured, for example.

In a case where it is determined that the water pressure is equal to or smaller than the threshold value C, the control unit 60 determines "Yes" in S202 and the program proceeds to S204. On the other hand, in a case where it is determined that the water pressure is greater than the threshold value C, the control unit 60 determines "No" in S202 and the program proceeds to S206. The water circulation pump 32a is operated normally (i.e., a normal operation of the water circulation pump 32a is performed). S202 serves as a water pressure decrease detection portion.

In S204, the output of the water circulation pump 32a increases. Specifically, the speed (the number of rotations) of the electric motor 32a1 increases to thereby increase the circulation flow rate of the storage water at the water circulation line 32 and to increase the water pressure of the storage water at the water circulation line 32. Until the water pressure reaches the threshold value C, the aforementioned operation is repeated in S202.

As mentioned above, the fuel cell system of the embodiment includes the fuel cell module 20 performing the power generation by electrochemical reaction and discharging the exhaust combustion gas that is generated by the power generation, the water storage tank 31 storing water that serves as the storage water, the water circulation line 32 (storage water circulation line) at which the storage water circulates, the water circulation pump 32a (storage water circulation pump) provided at the water circulation line 32 and driven by the electric motor 32a1, the heat exchanger 33 performing the heat exchange between the exhaust combustion gas and the storage water, the air bubble detection portion S102 detecting a generation of air bubbles at the water circulation line 32 and the control unit 60 controlling the water circulation pump 32a to stop operating for a predetermined time period in response to an air bubble detection signal generated by the air bubble detection portion S102 and to resume the operation of the water circulation pump 32a. Accordingly, in a case where it is detected that the air bubbles are generated at the water circulation line 32, the operation of the water circulation pump 32a is controlled to stop for the predetermined time period so that the air bubbles which are stirred are raised by buoyancy to be collected at the upper portion of the inside of the water circulation pump 32a, which results in a mass of air bubbles (enlarged air bubbles). The mass of air bubbles may be pushed out by the return or recovery of the operation of the water circulation pump 32a. The air bubbles move to the upper portion of the water storage tank 31 to stay thereat eventually so that the circulation flow rate of the storage water may be ensured. As a result, the deposition of the component (calcium, for example) contained in the storage water, which is caused by evaporation of the storage water flowing through the heat exchanger 33, is inhibited. The corrosion of the heat exchanger 33 resulting from the adhesion of the deposition substance (scale) to the heat exchanger 33 is inhibited accordingly.

In addition, in the fuel cell system of the embodiment, the air bubble detection portion S102 generates the air bubble detection signal in a case where one of the internal temperature T32d and the outlet temperature T32c of the heat exchanger 33 exceeds a threshold value. When the air bubbles are generated, the flow rate of the storage water decreases due to the generation of air bubbles and a cooling performance of the storage water is weaken. Thus, the generation of air bubbles is detectable on the basis of measurement of increase of the internal temperature T32d or the outlet temperature T32c of the heat exchanger 33.

Further, in the fuel cell system, the air bubble detection portion S102 generates the air bubble detection signal in a case where the number of rotations (the rotation speed) N of the water circulation pump 32a relative to the input value Va to the electric motor 32a1 exceeds the threshold value B. Thus, when the air bubbles are generated, the number of rotations N of the water circulation pump 32a increases because the air bubbles are lighter than the storage water and thus a load relative to the water circulation pump 32a decreases. Consequently, the generation of air bubbles is detectable on the basis of the measurement of the number of rotations (rotation speed) N of the water circulation pump 32a.

Furthermore, the fuel cell system includes the water pressure decrease detection portion S202 detecting that the water pressure at the water circulation line 32 is lower than the threshold value C. The control unit 60 controls the operation of the water circulation pump 32a so that the flow rate of the storage water flowing through the water circulation line 32 increases in response to a water pressure decrease detection signal generated by the water pressure decrease detection portion S202. Thus, in a case where the water pressure at the water circulation line 32 becomes lower than the threshold value, the water circulation pump 32a is operated to increase the flow rate of the storage water flowing through the water circulation line 32 so as to ensure the flow rate of the storage water.

Furthermore, in the fuel cell system, the water pressure decrease detection portion S202 includes the pressure sensor 32e provided at the upstream side than the heat exchanger 33 at the water circulation line 32. Thus, the decrease of water pressure at the water circulation line 32 is directly detectable by the pressure sensor 32e.

In a case where plural embodiments exist, unless otherwise specified, features of the respective embodiments may be appropriately combined.

## Claims

1. A fuel cell system comprising:
a fuel cell module (20) adapted to perform power generation by an electrochemical reaction and discharge an exhaust combustion gas that is generated by the power generation;
a water storage tank (31) storing water that serves as a storage water;
a storage water circulation line (32) at which the storage water circulates;
a storage water circulation pump (32a) provided at the storage water circulation line (32) and driven by an electric motor (32a1);
a heat exchanger (33) adapted to perform a heat exchange between the exhaust combustion gas and the storage water; and
an air bubble detection portion (S102) adapted to detect a generation of air bubbles at the storage water circulation line (32); and
a control unit (60) adapted to control the storage water circulation pump (32a),
**characterized in that**
the control unit (60) is adapted to stop the storage water circulation pump (32a) operating for a predetermined time period in response to an air bubble detection signal generated by the air bubble detection portion (S102) and to resume the operation of the storage water circulation pump (32a), wherein the predetermined time period is a time period in which air bubbles that are stirred are raised by buoyancy to be collected at an upper portion of an inside of the storage water circulation pump (32a) which results in a mass of air bubbles.

2. The fuel cell system according to claim 1, wherein the air bubble detection portion (S102) is adapted to generate the air bubble detection signal in a case where one of an internal temperature (T32d) and an outlet temperature (T32c) of the heat exchanger (33) exceeds a threshold value, the internal temperature (T32d) corresponding to the temperature of the storage water at the storage water circulation line (32) within the heat exchanger (33) and the outlet temperature (T32c) corresponding to the temperature of the storage water flowing out of the heat exchanger (33) at the storage water circulation line (32).

3. The fuel cell system according to claim 1, wherein the air bubble detection portion (S102) is adapted to generate the air bubble detection signal in a case where a rotation speed (N) of the storage water circulation pump (32a) relative to an input value (Va) to the electric motor (32a1) exceeds a threshold value (B).

4. The fuel cell system according to any one of claims 1 through 3, further comprising:
a water pressure decrease detection portion (S202) adapted to detect that a water pressure at the storage water circulation line (32) is lower than a threshold value (C), wherein the control unit (60) is adapted to control the operation of the storage water circulation pump (32a) so that a flow rate of the storage water flowing through the storage water circulation line (32) increases in response to a water pressure decrease detection signal generated by the water pressure decrease detection portion (S202).

5. The fuel cell system according to claim 4, wherein the water pressure decrease detection portion (S202) includes a pressure sensor (32e) provided at an upstream side than the heat exchanger (33) at the storage water circulation line (32).

## Patentansprüche

1. Brennstoffzellensystem mit:
einem Brennstoffzellenmodul (20), das eingerichtet ist, durch eine elektrochemische Reaktion Stromerzeugung durchzuführen und ein Abgasbrenngas, das durch die Stromerzeugung erzeugt wird, abzugeben;
einem Wasserspeichertank (31), der Wasser speichert, das als ein Speicherwasser dient;
einer Speicherwasser-Zirkulationsleitung (32), an der das Speicherwasser zirkuliert;
einer Speicherwasser-Zirkulationspumpe (32a), die an der Speicherwasser-Zirkulationsleitung (32) vorgesehen ist und durch einen Elektromotor (32a1) angetrieben wird;
einem Wärmetauscher (33), der eingerichtet ist, zwischen dem Abgasbrenngas und dem Speicherwasser einen Wärmetausch durchzuführen; und
einem Luftblasen-Erfassungsabschnitt (S102), der eingerichtet ist, an der Speicherwasser-Zirkulationsleitung (32) eine Erzeugung von Luftblasen zu erfassen; und
einer Steuerungseinheit (60), die eingerichtet ist, die Speicherwasser-Zirkulationspumpe (32a) zu steuern,
**dadurch gekennzeichnet, dass**
die Steuerungseinheit (60) eingerichtet ist, im Ansprechen auf ein Luftblasen-Erfassungssignal, das vom Luftblasen-Erfassungsabschnitt (S102) erzeugt wird, den Betrieb der Speicherwasser-Zirkulationspumpe (32a) für eine bestimmte Zeitdauer einzustellen und den Betrieb der Speicherwasser-Zirkulationspumpe (32a) wiederaufzunehmen, wobei die vorbestimmte Zeitdauer eine Zeitdauer ist, in der Luftblasen, die aufgewühlt sind, durch Auftrieb angehoben werden, sodass sie sich an einem oberen Abschnitt einer Innenseite der Speicherwasser-Zirkulationspumpe (32a) sammeln, was zu einer Masse an Luftblasen führt.

2. Brennstoffzellensystem nach Anspruch 1, wobei der Luftblasen-Erfassungsabschnitt (S102) eingerichtet ist, das Luftblasen-Erfassungssignal in einem Fall zu erzeugen, in dem entweder eine Innentemperatur (T32d) oder eine Auslasstemperatur (T32c) des Wärmetauschers (33) einen Schwellenwert überschreitet, wobei die Innentemperatur (T32d) der Temperatur des Speicherwassers an der Speicherwasser-Zirkulationsleitung (32) innerhalb des Wärmetauschers (33) entspricht und die Auslasstemperatur (T32c) der Temperatur des Speicherwassers entspricht, das an der Speicherwasser-Zirkulationsleitung (32) aus dem Wärmetauscher (33) herausfließt.

3. Brennstoffzellensystem nach Anspruch 1, wobei der Luftblasen-Erfassungsabschnitt (S102) eingerichtet ist, das Luftblasen-Erfassungssignal in einem Fall zu erzeugen, in dem eine Drehzahl (N) der Speicherwasser-Zirkulationspumpe (32a) bezüglich eines Eingabewerts (Va) in den Elektromotor (32a1) einen Schwellenwert (B) überschreitet.

4. Brennstoffzellensystem nach einem der Ansprüche 1 bis 3, mit außerdem:
einem Wasserdruckabnahme-Erfassungsabschnitt (S202), der eingerichtet ist zu erfassen, dass ein Wasserdruck an der Speicherwasser-Zirkulationsleitung (32) niedriger als ein Schwellenwert (C) ist, wobei die Steuerungseinheit (60) eingerichtet ist, den Betrieb der Speicherwasser-Zirkulationspumpe (32a) so zu steuern, dass im Ansprechen auf ein Wasserdruckabnahme-Erfassungssignal, das vom Wasserdruckabnahme-Erfassungsabschnitt (S202) erzeugt wird, eine Durchflussmenge des Speicherwassers, das durch die Speicherwasser-Zirkulationsleitung (32) fließt, zunimmt.

5. Brennstoffzellensystem nach Anspruch 4, wobei der Wasserdruckabnahme-Erfassungsabschnitt (S202) einen Drucksensor (32e) umfasst, der an der Speicherwasser-Zirkulationsleitung (32) auf einer weiter stromaufwärtigen Seite als der Wärmetauscher (33) vorgesehen ist.

## Revendications

1. Système de pile à combustible qui comprend :
un module de pile à combustible (20) conçu pour réaliser une production d'énergie par une réaction électrochimique et évacuer un gaz de combustion d'échappement qui est produit par la production d'énergie ;
un réservoir de stockage d'eau (31) qui stocke une eau qui sert en tant qu'eau de stockage ;
un tube de circulation d'eau de stockage (32) au niveau duquel l'eau de stockage circule ;
une pompe de circulation d'eau de stockage (32a) prévue au niveau du tube de circulation d'eau de stockage (32) et entraînée par un moteur électrique (32a1) ;
un échangeur thermique (33) conçu pour réaliser un échange thermique entre le gaz de combustion d'échappement et l'eau de stockage ; et
une partie de détection de bulles d'air (S102) conçue pour détecter une production de bulles d'air au niveau du tube de circulation d'eau de stockage (32) ; et
une unité de commande (60) conçue pour commander la pompe de circulation d'eau de stockage (32a),
**caractérisé en ce que**
l'unité de commande (60) est conçue pour arrêter la pompe de circulation d'eau de stockage (32a) qui fonctionne pendant une durée prédéterminée en réponse à un signal de détection de bulles d'air produit par la partie de détection de bulles d'air (S102) et pour reprendre le fonctionnement de la pompe de circulation d'eau de stockage (32a), dans lequel la durée prédéterminée est une durée dans laquelle des bulles d'air qui sont agitées sont soulevées par flottabilité pour être recueillies au niveau d'une partie supérieure d'un intérieur de la pompe de circulation d'eau de stockage (32a) qui résulte en une masse de bulles d'air.

2. Système de pile à combustible selon la revendication 1, dans lequel la partie de détection de bulles d'air (S102) est conçue pour produire le signal de détection de bulles d'air dans un cas où l'une parmi une température interne (T32d) et une température de sortie (T32c) de l'échangeur thermique (33) dépasse une valeur seuil, la température interne (T32d) correspondant à la température de l'eau de stockage au niveau du tube de circulation d'eau de stockage (32) à l'intérieur de l'échangeur thermique (33) et la température de sortie (T32c) correspondant à la température de l'eau de stockage s'écoulant hors de l'échangeur thermique (33) au niveau du tube de circulation d'eau de stockage (32).

3. Système de pile à combustible selon la revendication 1, dans lequel la partie de détection de bulles d'air (S102) est conçue pour produire le signal de détection de bulles d'air dans un cas où une vitesse de rotation (N) de la pompe de circulation d'eau de stockage (32a) par rapport à une valeur d'entrée (Va) vers le moteur électrique (32a1) dépasse une valeur seuil (B).

4. Système de pile à combustible selon l'une quelconque des revendications 1 à 3, qui comprend en outre :
une partie de détection de diminution de pression d'eau (S202) conçue pour détecter qu'une pression d'eau au niveau du tube de circulation d'eau de stockage (32) est inférieure à une valeur seuil (C), dans lequel l'unité de commande (60) est conçue pour commander le fonctionnement de la pompe de circulation d'eau de stockage (32a) de sorte qu'un débit de l'eau de stockage circulant à travers le tube de circulation d'eau de stockage (32) augmente en réponse à un signal de détection de diminution de pression d'eau produit par la partie de détection de diminution de pression d'eau (S202).

5. Système de pile à combustible selon la revendication 4, dans lequel la partie de détection de diminution de pression d'eau (S202) inclut un capteur de pression (32e) prévu au niveau d'un côté amont que l'échangeur thermique (33) au niveau du tube de circulation d'eau de stockage (32).
